# EUROPEAN PATENT APPLICATION

(11) **EP 0 631 714 A1**
(43) Date of publication of application: **04.01.1995**
(21) Application number: 94304791.0
(22) Date of filing: 30.06.1994
(51) Int. Cl.: A01D 34/68, F16P 3/24

(54) **Improvements in power driven mowers**

(30) Priority: 02.07.1993 GB 9313765
(71) Applicant: ELECTROLUX OUTDOOR PRODUCTS LIMITED, Newton Aycliffe, Co Durham DL5 6UP (GB)
(72) Inventor: Turner, Graham, Darlington, Co. Durham (GB); Hodgkinson, Ivan, Armthorpe, Doncaster DN3 3DW (GB)
(74) Representative: Arthur, Bryan Edward

(57) **Abstract**

Referring to Fig. 2, the engine of a power driven mower and the drive to the mower are both controlled by a single bail (3) pivoted to the mower handle (2) . When the bail (3) is fully released, a switch or brake renders the motor inoperative. In a first position, the motor can operate but the drive clutch is disengaged and in a second position, the drive clutch is engaged. The bail (3) is so shaped that it is brought to the first position when it is grasped together with the sides of the handle (2) and to the second position when it is grasped together with the rear bar of the handle (2).

## Description

The invention is concerned with power-driven mowers and provides a safety feature for such mowers.

In power driven mowers apart from the controls for the engine itself a control lever is required to enable the operator to engage or disengage the drive to the land wheels or rollers which propel the mower forward. This control lever normally takes the form of a bail hinged to the mower handle so that it can be grasped together with the handle by the operator during mowing.

It is a desirable feature and in some countries required by law that when a power mower is left unattended the engine of the mower or at least the cuter blades should be brought to a standstill. In the prior art this has been achieved by means of a second bail attached to the mower handle so that when the operator lets go of the handle, the bail is released and the engine is brought to a standstill by means of a switch or brake. Such an arrangement is complicated and confusing to the operator since he has to bear clearly in mind which bail performs which operation and he is likely to stop the engine unintentionally each time he momentarily wishes to disengage the drive.

The present invention which is defined in the appended claims provides a simple arrangement which is not confusing to the operator which readily allows the drive to be disengaged without stopping the engine which is less complicated in that it involves only a single bail.

The invention will be described in more detail with reference to the accompanying drawings in which Figure 1 is a diagrammatic side view of a handle and bails of a mower according to the prior art. Figure 2 is a diagrammatic side view of a control bail as used in the present invention. Figure 3 is a diagram illustrating the bail in its fully engaged position and Figures 4a and 4b show an additional feature which may be employed with the invention.

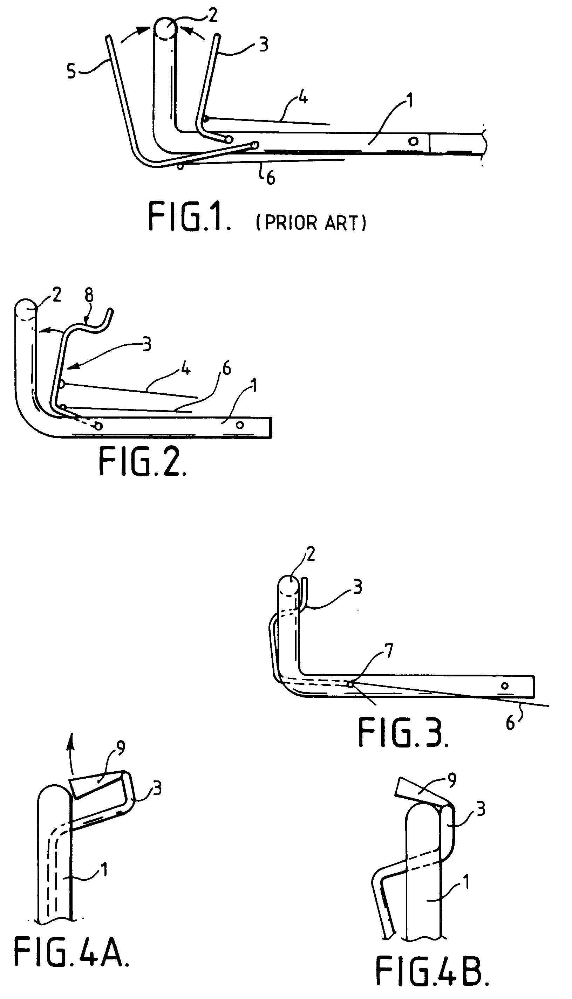

Referring first to Figure 1 a mower has a handle (1) of generally U shape with the ends of the legs attached to the mower at the sides and with the bend of the U bent backwards to provide a bar (2) in a convenient position for grasping. A bail (3) is hinged to the handle and connected by a cable (4) to the clutch so that when the operator grasps the handle and pulls up the bail (3) the clutch is engaged and the mower moves forward.

As a safety precaution a second bail (5) above the handle is connected by a further cable (6) to a switch or brake so that when the bail is in the position shown in the drawing the engine or motor of the mower is stopped.

This prior art arrangement has the disadvantages that the operator has the inconvenience of grasping not only the handle but two separate switch bails and if when he comes to manoeuvre the mower to mow an awkwardly shaped area he wishes to disengage the drive, he may accidentally let go of the wrong one and have the bother of re-starting the mower again.

The present invention is illustrated diagrammatically in Figure 2. It depends on the fact that instinctively when the mower is in self propelled power drive the operator will hold it by the cross bar at the top of the handle, whereas in manoeuvring it with the self propulsion drive disengaged he will normally grasps the sides. In the Figure, the bail (3) is shown in the inoperative position when the mower is at risk when the engine not started. Two cables are connected to the bail, one of which (4) is the clutch cable while the other (6) is the cable which controls the operation of the blade. The bail (3) is pivoted to the handle at (7) and is specially shaped, the sides being bent back in a double bend at (8). This allows the bail (3) to have two operative positions, in the first of which the sides of the bail are juxtaposed with the sides of the handle and in the second the rear bar of the bail lies against the rear of the handle.
In the first position, the motor operates the blades but not the self propulsion drive. The blades will therefore rotate to cut the grass, but the operator must propel the mower around an area of grass.
In the second position, the motor operates both the blade and the self propulsion drive. The self propulsion drive is engaged by means of a drive clutch.

When the bail is released, the drive clutch is disengaged, thereby reducing the likelihood that the mower will go out of control. Furthermore, drive to the blade is removed when the bail is released. If the blade is mounted directly on the output shaft of the engine, the blade is stopped by the engine being turned off. If a clutch is mounted between the blade and the engine, then the clutch may be disengaged. In either case, it is preferable to include braking means for stopping the blade in a short period of time after the bail has been released.

To start the mower, the operator grasps the side of the handle raising the bail to the position in which the switch or brake cable (6) closes a switch or removes the brake allowing the mower to be started and he then starts the motor. If he then transfers his grip to the rear bar, he brings the bail into its second position in which the clutch cable engages the clutch causing the mower to be driven forward. For hand control of the mower for mowing awkwardly shaped areas, the operator merely transfers his grip to the sides of the handle which is what he would do almost instinctively in any case and this disengages the clutch while allowing the engine to remain running, and the blade to continue turning.

Figure 3 illustrates diagrammatically a desirable feature of the invention in that the brake cable (6) which is preferably tensioned by a fairly strong spring is attached to the side of the bail at such a point that when the bail is raised into its second position, it is in line with or perhaps slightly over centre with regard to the pivot (7). In this position, the brake cable exerts a little or no force on the bail and the operator has only to overcome the relatively much less force of the clutch engaging cable (4) which renders the holding of the bail less tiring in long periods of use. The relatively strong spring which can be used with the switch or brake cable (6) without thereby burdening the operator provides an additional safeguard against the bail sticking and failing to disengage when released.

Figures 4a and 4b illustrates diagrammatically an additional optional feature of the invention. This comprises a toggle (9) pivoted to the rear bar of the bail or the handle in such as a way as to prevent the bail from being moved from its first to its second position inadvertently. In order to drive the mower forward, the operator has to flip this toggle out of the way when he moves the bail to its second position. The toggle may be sprung or maybe hinged or allowed to fall into place by gravity.

## Claims

1. A power driven mower including a handle and a power drive is controlled by bail means mounted on the mower handle characterised in that a single bail controls both the operation of a mower blade and the engagement of a self propulsion drive clutch and the bail is so shaped and connected to the mower handle that grasping the mower handle and bail together at the sides of the handle moves the bail into a first position which permits the operation of the blade and grasping the mower handle and bail together at an upper part of the handle further moves the bail into a second position in which it allows the self propulsion drive clutch to engage.

2. A power driven mower in which the power drive is controlled by bail means mounted on a mower handle characterised in that a single bail controls both the running of the engine and the engagement of a drive clutch and the bail is so shaped and connected to the mower handle that grasping the mower handle and bail together at the sides of the handle moves the bail into a first position which permits the engine to run and grasping the mower handle and bail together at an upper part of the handle further moves the bail into a second position in which it allows the drive clutch to engage.

3. A power driven mower according to claim 1 characterized in that the blade is driven through a blade clutch, and the blade clutch is engaged when the bail is in the first or second position.

4. A power driven mower according to any preceding claim characterized in that the mower further comprises blade braking means which is disengaged when the bail is in the first or second position.

5. A power driven mower according to claims 1, 2 and 4 characterized in that the blade is mounted directly on a drive line of the engine and, when the bail is in the first or second position, the running of the engine operates the blade.

6. A power driven motor according to claims 2, 4 & 5 characterized in that the mower further comprises drive line braking means which is disengaged when the bail is in the first of second position.

7. A power driven mower according to any preceding claim in which a toggle arm pivoted to the bail or to the handle prevents the accidental movement of the bail from the first to the second position.

8. A power driven mower according to any preceding claim in which the running of the engine is controlled by a switch or a brake and both the self propulsion drive clutch and the switch or brake are operated by cables attached to the bail and are spring loaded so as to disengage the self propulsion drive clutch and stop the engine when the bail is released and the self propulsion drive clutch cable is attached to the bail in such a position that the spring tensioning the cable exerts little or no force on the bail when the bail is in the second position.

9. A power driven mower according to any preceding claim driven by an electrically started petrol engine.

10. A power driven mower according to any preceding claim characterized in that when the bail is released, operation of the blade ceases.

11. A power driven mower according to claim 10 characterized in that when the bail is released, the blade braking means are engaged.

12. A power driven mower according to claims 10 and 11 characterized in that when the bail is released, the blade clutch is disengaged.
